**Europäisches Patentamt**

**European Patent Office**

**Office européen des brevets**

(19)

(11) Publication number: **0 144 134 B1**

## EUROPEAN PATENT SPECIFICATION

(12)

(45) Date of publication of patent specification: **31.01.90**

(51) Int. Cl.⁵: **G 01 N 1/28**

(21) Application number: **84307046.7**

(22) Date of filing: **15.10.84**

(54) **Method for the dilution of liquid samples.**

(30) Priority: **30.11.83 FI 834387**

(43) Date of publication of application:
**12.06.85 Bulletin 85/24**

(45) Publication of the grant of the patent:
**31.01.90 Bulletin 90/05**

(84) Designated Contracting States:
**AT BE CH DE FR GB IT LI LU NL SE**

(56) References cited:
**DE-A-2 525 340**
**DE-A-3 033 680**
**FR-A-2 553 891**
**US-A-3 668 936**
**US-A-3 831 618**
**US-A-3 955 930**
**US-A-4 327 595**

(73) Proprietor: **LABSYSTEMS OY**
**Pulttitie 9**
**SF-00810 Helsinki 81 (FI)**

(72) Inventor: **Ekholm, Pertti**
**Sammatintie 6 L 130**
**SF-00550 Helsinki 55 (FI)**
Inventor: **Kaukanen, Esko**
**Akselinpolku 7 D 20**
**SF-02230 Espoo 32 (FI)**

(74) Representative: **Freed, Arthur Woolf et al**
**Reginald W. Barker & Co. 13 Charterhouse**
**Square**
**London EC1M 6BA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention is concerned with a method and an equipment for the transfer or for precise dilution of liquids. The invention is utilized, e.g., in photometers and fluorometers.

In the field on clinical chemistry and, in particular, of microbiology, there is an abundance of assays in which large numbers of samples must be treated. It is still quite usual that the transfers of samples and reagents take place one by one. True enough, apparatuses have been developed (e.g., the multi-channel Finnpipette® by means of which it is possible to transfer several samples or doses of reagents at the same time. To achieve a sufficiently high speed and accuracy when samples are shifted and diluted at the same time is still a great problem. In particular, in pipetting of small liquid quantities of the order of a microlitre, the accuracy is limited by the fact that the point of cutting off of the liquid column, when discharge of suction of liquid is interrupted, cannot be predicted precisely, i.e. the size of the liquid drop remaining at the tip of the pipette is haphazard.

Patent specification US 2 980 512 discloses a continuously working colorimeter, in which sample is brought through a pipe into a cuvette, and part of the sample flown through the cuvette is fed back into the intake pipe through a feedback pipe, which joins the intake pipe on its wall. The device is not, however, applicable in dilutions and transfers of separate samples, when high precision is needed.

US-A-4327595 does show a method and an apparatus for diluting liquid samples and has a narrow diluent chamber, terminating at a lower open end above a downwardly directed conical chamber for a sample. The conical chamber terminates in an open lower end. In use, the diluent channel is filled with diluent whereafter the conical chamber below the lower end of the diluent channel is filled with a sample. To effect dispensing the diluent is forced out of the diluent channel in a jet, mixes with the sample, and is ejected through the lower end of the conical sample chamber.

The purpose of this invention is to create a method and apparatus for the precise, automatic dilution and transfer of liquid samples, especially small liquid samples.

According to one aspect of the present invention, there is provided a method for the dilution of a liquid sample, comprising mixing a diluent and a sample within that part of a downwardly directed main channel which is above its lower end which is open, and ejecting the mixture of the diluent and sample from the lower end of the main channel, characterised in that the main channel is filled with the diluent, the sample is supplied from a downwardly directed lower end of a side channel which terminates at its lower end within the main channel above the lower end of the main channel, and in that the diluent is pumped out of the lower end of the main channel while the sample is fed out of the lower end of the side channel.

The method in accordance with the invention permits the preparation of several different dilutions out of the same sample rapidly and accurately one after the other. When volumes of 1 μl are dosed in accordance with the invention, an average scattering lower than 1% is obtained.

According to another aspect of the present invention, there is provided apparatus for diluting a liquid sample comprising a downwardly directed main channel open at its lower end, means for filling the main channel with a diluent, and supply means for supplying sample to the lower end of the main channel in the zone immediately above its open end, characterised in that said supply means comprises a side channel which enters the main channel intermediate its ends and has a downwardly directed portion terminating in an opened end above the open end of the main channel.

The invention and its applications will be described in more detail in the following with reference to the attached drawings, wherein

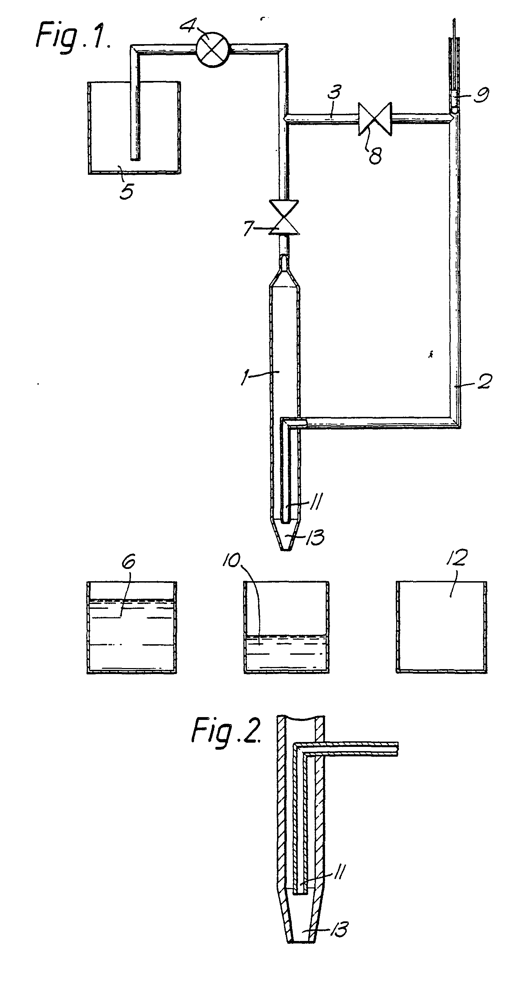

Figure 1 shows the flow diagram of the apparatus in accordance with the invention, and

Figure 2 shows the coaxial positioning of the pipes of the main channel and the side channel at the tip of the liquid dosimeter.

In the example that will be described here, a series dilution will be performed, wherein the main channel 1 contains water and the side channel 2 the sample. Depending on the required ratios of dilution, the channels may also be distributed in a different way. The liquids used may also be chosen arbitrarily; often, for example, a reagent is used instead of the water.

The operation is started by filling both of the channels 1 and 2 and their connecting channel 3 with water. This can take place either by pumping water by means of a tubing pump 4 out of a container 5 or a water vessel 6 while the valves 7 and 8 are open simultaneously or alternatingly and while the piston 9 is at its extreme lower position. Hereupon the sample is sucked into the side channel out of the liquid vessel 10 by closing the valves 7 and 8 and by pulling the piston 9 rearwards. The sample is sucked in as a larger quantity than what is needed in the dilution series, because the upper portion of the sample sucked in is diluted owing to the water contained in the common part of the channels and the water adhering to the walls of the side channel. After the piston 9 has been stopped, the valve 7 is opened and water is pumped out as such a quantity that the common part of the channels becomes clean of the sample. Thereby the sample column is cut off at the tip 11 of the side channel precisely and reproducibly. The diluted sample is delivered into the diluting vessel 12 as follows: the valve 7 is kept open and the valve 8 closed. By means of the tubing pump 4, water starts being pumped into the diluting vessel 12. At the same time, or slightly afterwards, liquid is pushed by means of the piston 9 into the common part of the channels, from where it is carried along with the water into the dilution vessel 12, being at the same time mixed well. The desired ratio of dilution is obtained by selecting the ratio of the pumping speeds and/or of the lengths of the pumping cycles appropriately. The piston 9 is stopped, and after the common part of the channels has again become clean, the tubing pump 4 is also stopped. Hereinafter it is immediately possible to shift the dosage tip to above a new dilution vessel, or a new dilution vessel may be brought to underneath the dosage tip, and a new dilution can be performed with the same or with a different ratio of dilution.

A particular advantage of the method of the present invention is an improved accuracy of dosage of the sample, owing to the fact that the cutting off of the sample column takes place in the tip which is surrounded by a liquid at all sides. In this way, detrimental tip phenomena are avoided, such as, e.g., unpredictable convexity or concavity of the sample surface inside the tip, splashing of the sample to the outside face of the tip with subsequent deficit, as well as possible mixing with some subsequent sample. A sample splashing onto the outer face of a tip surrounded by air can be removed by means of mechanical cleaning or by liquid flushing, but in such a case it is impossible to predict the quantity of sample lost from inside the tip on cleaning precisely. Also, if washing liquid has adhered to the outer face of the tip during washing of the tip, this liquid dilutes the sample locally at the very point from which sample is sucked into the tip after the washing.

Since water and sample are in contact with each other at the tip of the sample pipe, diffusion of the sample, and vice versa, takes place. The effect of diffusion can be minimized by using rapid and always equally long cycles of operation. Mixing of the upper end of the sample (which was sucked first into the sample channel) and water can be prevented by, between them, sucking a bubble of air or a little quantity of a liquid that is not mixed into the sample nor into water and does not react with any of them.

As a further advantage of the method in accordance with the invention should be mentioned the good mixing result, which is obtained when the sample and the water are mixed in the common part of the channels and fall down into the dilution vessel. In many cases, this makes a separate mixing step unnecessary.

The method of the present invention also permits the use of a concentrated reagent, whereat the reagent is taken into the sample channel and diluted to the appropriate level at the output stage, into different cuvettes either with the same dilution or with a varying dilution degree. By means of the method, it is also possible to use two reagents which can be mixed together only immediately before use, by placing one of them in the main channel and the other one in the side channel.

**Claims**

1. A method for the dilution of a liquid sample, comprising mixing a diluent and a sample within that part of a downwardly directed main channel (1) which is above its lower end (13) which is open, and ejecting the mixture of the diluent and sample from the lower end (13) of the main channel (1), characterised in that the main channel (1) is filled with the diluent, the sample is supplied from a downwardly directed lower end (11) of a side channel (2) which terminates at its lower end (11) within the main channel (1) above the lower end (13) of the main channel (1), and in that the diluent is pumped out of the lower end (13) of the main channel (1) while the sample is fed out of the lower end (11) of the side channel (2).

2. A method according to claim 1, characterised in that the main channel (1) is filled with the diluent by sucking that diluent into the main channel through its lower end (13).

3. A method according to claim 1, characterised in that the main channel (1) is filled with the diluent by pumping the diluent into it through its other end.

4. Apparatus for diluting a liquid sample comprising a downwardly directed main channel (1) open at its lower end (13), means (4) for filling the main channel with a diluent, and supply means (9) for supplying sample to the lower end of the main channel (1) in the zone immediately above its open end (13), characterised in that said supply means comprises a side channel (2) which enters the main channel (1) intermediate its ends and has a downwardly directed portion terminating in an opened end (11) above the open end (13) of the main channel (1).

5. Apparatus according to claim 4, characterised by a suction pump (4) connected to the other end of tbe main channel (1) for sucking diluent into the main channel (1) through its lower end (13).

6. Apparatus according to claim 4, characterised by a pump (4) connected to the other end of the main channel (1) for supplying diluent thereto.

7. Apparatus according to any preceding claim, characterised by a suction device connected to tbe end of the side channel (2) remote from the main channel (1) for applying suction to the side channel (2) for introducing a liquid sample into the side channel through its lower end (11).

8. Apparatus according to claim 7, characterised in that a connecting channel (3) connects the main and side channels (1, 2) and has a valve (8) therein and wherein a valve (7) is connected in the main channel between the point of connection to the connecting channel (3) and the point of entry of the side channel (2) into the main channel (1).

9. Apparatus according to claim 8, characterised in that the pump (9) comprises a piston slidable within the side channel (2), the lower extreme position of the piston (9) being at the point of connection of the connecting channel (3) and the side channel (2).

10. Apparatus according to any of claims 4 to 9, characterised in that the lower end (13) of the main channel (1) has the shape of a truncated cone.

11. Apparatus according to any of claims 4 to 9, characterised in that the lower end (13) of the side channel (2) is cylindrical.

**Patentansprüche**

1. Verfahren zur Verdünnung einer Flüssigprobe, bei dem ein Verdünnungsmittel und eine Probe innerhalb eines Teiles eines nach abwärts gerichteten Hauptkanales (1) gemischt werden, der oberhalb des unteren Endes (13) vorgesehen ist und der offen ist, und die Mischung des Verdünnungsmittels und der Probe aus dem unteren Ende (13) des Hauptkanals (1) ausgestoßen werden, dadurch gekennzeichnet, daß daß der Hauptkanal (1) mit dem Verdünnungsmittel gefüllt ist, daß die Probe von einem abwärts gerichteten, unteren Ende (11) eines Seitenkanales (2) zugeführt wird, der an seinem unteren Ende (11) innerhalb des Hauptkanales (1) oberhalb des unteren Endes (13) des Hauptkanales (1) endet und daß das Verdünnungsmittel aus dem unteren Ende (13) des Hauptkanales (1) gepumpt wird, wohingegen die Probe aus dem unteren Ende (11) des Seitenkanales (2) zugeführt wird.

2. Verfahren nach Anspruch 1, dadurch gekennzeichnet, daß der Hauptkanal (1) mit dem Verdünnungsmittel durch Saugen dieses Verdünnungsmittels in den Hauptkanal durch das untere Ende (13) gefüllt wird.

3. Verfahren nach Anspruch 1, dadurch gekennzeichnet, daß der Hauptkanal (1) mit dem Verdünnungsmittel durch Pumpen des Verdünnungsmittels durch das andere Ende gefüllt wird.

4. Gerät zum Verdünnen einer Flüssigprobe mit einem abwärts gerichteteten Hauptkanal (1), der an seinem unteren Ende (13) offen ist, mit Einrichtungen (4) zum Füllen des Hauptkanales mit dem Verdünnungsmittel und mit Zufuhreinrichtungen (9) zum Zuführen der Probe zum unteren Ende des Hauptkanales (1) in der Zone unmittelbar oberhalb des offenen Endes (13), dadurch gekennzeichnet, daß die Zuführeinrichtungen einen Seitenkanal (2) aufweisen, der in den Hauptkanal (1) zwischen dessen Enden eintritt und einen abwärts gerichteten Abschnitt hat, der in einem offenen Ende (11) oberhalb des offenen Endes (13) des Hauptkanales (1) endet.

5. Gerät nach Anspruch 4, dadurch gekennzeichnet, daß eine Saugpumpe (4) mit dem anderen Ende des Hauptkanales (1) zum Einsaugen des Verdünnungsmittels in den Hauptkanal (1) durch dessen unteres Ende (13) verbunden ist.

6. Gerät nach Anspruch 4, dadurch gekennzeichnet, daß eine Pumpe (4) mit dem anderen Ende des Hauptkanales (1) zur Zufuhr des Verdünnungsmittels verbunden ist.

7. Gerät nach einem der vorhergehenden Ansprüche, dadurch gekennzeichnet, daß eine Saugeinrichtung mit dem Ende des Seitenkanales (2) abgewandt vom Hauptkanal (1) verbunden ist, um einen Saugzug auf den Seitenkanal (2) aufzubringen, um eine Flüssigprobe in den Seitenkanal durch das untere Ende (11) einzubringen.

8. Gerät nach Anspruch 7, dadurch gekennzeichnet, daß ein Verbindungskanal (3) den Haupt- und den Seitenkanal (1, 2) verbindet und ein Ventil (8) hat, und daß ein Ventil (7) mit dem Hauptkanal zwischen dem Verbindungspunkt zum Verbindungskanal (3) und dem Eintrittspunkt des Seitenkanales (2) in den Hauptkanal (1) verbunden ist.

9. Gerät nach Anspruch 8, dadurch gekennzeichnet, daß die Pumpe (9) einen innerhalb des Seitenkanales (2) gleitbaren Kolben aufweist, wobei die äußerste untere Lage des Kolbens (9) am Verbindungspunkt des Verbindungskanales (3) und des Seitenkanales (2) ist.

10. Gerät nach einem der Ansprüche 4 bis 9, dadurch gekennzeichnet, daß das untere Ende (13) des Hauptkanales (1) die Form eines Kegelstumpfes hat.

11. Gerät nach einem der Ansprüche 4 bis 9, dadurch gekennzeichnet, daß das untere Ende (13) des Seitenkanales (2) zylindrisch ist.

**Revendications**

1. Procédé pour la dilution d'un échantillon liquide, comprenant le mélange d'un diluant et d'un échantillon dans la partie d'un canal principal dirigé vers le bas (1) qui se trouve au-dessus de son extrémité inférieure (13), qui est ouverte, et l'éjection du mélange de diluant et de l'échantillon par l'extrémité inférieure (13) du canal principal (1), caractérisé en ce que ce canal principal (1) est rempli de diluant, l'échantillon est fourni à partir d'une extrémité inférieure (11) dirigée vers le bas d'un canal latéral (2) qui se termine à son extrémité inférieure (11) à l'intérieur du canal principal (1) au-dessus de l'extrémité inférieure (13) de ce canal principal (1), et en ce que le diluant est pompé hors de l'extrémité inférieure (13) du canal principal (1) pendant que l'échantillon est fourni par l'extrémité inférieure (11) du canal latéral (2).

2. Procédé selon la revendication 1, caractérisé en ce que le canal principal (1) est rempli de diluant par succion de ce diluant à l'intérieur du canal principal à travers son extrémité inférieure (13).

3. Procédé selon la revendication 1, caractérisé en ce que le canal principal (1) est rempli de diluant par pompage de ce diluant à travers son autre extrémité.

4. Appareil pour la dilution d'un échantillon liquide comprenant un canal principal (1), dirigé vers le bas ouvert à son extrémité inférieure (13), un moyen (4) pour remplir de diluant le canal principal et un moyen (9) d'alimentation pour fournir l'échantillon à l'extrémité inférieure du canal principal (1) dans la zone immédiatement au-dessus de son extrémité ouverte (13), caractérisé en ce que ledit moyen d'alimentation comprend un canal latéral (2) qui entre dans le canal principal (1) en un point intermédiaire entre ses extrémités et qui a une partie dirigée vers le bas se terminant par une extrémité ouverte (11) au-dessus de l'extrémité ouverte (13) du canal principal (1).

5. Appareil selon la revendication 4, caractérisé par une pompe d'aspiration (4) raccordée à l'autre extrémité du canal principal (1) pour aspirer du diluant dans ce canal principal (1) à travers son extrémité inférieure (13).

6. Appareil selon la revendication 4, caractérisé par une pompe raccordée à l'autre extrémité du canal principal (1) pour fournir du diluant à ce dernier.

7. Appareil selon l'une quelconque des revendications précédentes, caractérisé par un dispositif de succion raccordé à l'extrémité du canal latéral (2) éloignée du canal principal (1) pour produire une dépression dans le canal latéral (2) et introduire un échantillon liquide dans ce canal latéral à travers son extrémité inférieure (11).

8. Appareil selon la revendication 7, caractérisé en ce qu'un canal de liaison (3) raccorde les canaux principal et latéral (1, 2) et comporte une vanne (8), et dans lequel une vanne (7) est montée sur le canal principal entre le point de raccordement avec le canal de liaison (3) et le point d'entrée du canal latéral (2) dans le canal principal (1).

9. Appareil selon la revendication 8, caractérisé en ce que la pompe (9) comporte un piston pouvant coulisser à l'intérieur du canal latéral (2), la position extrême inférieure du piston (9) étant le point de raccordement du canal de liaison (3) et du canal latéral (2).

10. Appareil selon l'une quelconque des revendications 4 à 9, caractérisé en ce que l'extrémité inférieure (13) du canal principal (1) a un profil tronconique.

11. Appareil selon l'une quelconque des revendications 4 à 9, caractérisé en ce que l'extrémité inférieure (13) du canal latéral (2) est cylindrique.

Fig.1.

Fig.2.